# EUROPEAN PATENT APPLICATION

(11) **EP 4 086 092 A1**
(43) Date of publication of application: **09.11.2022**
(21) Application number: 20891220.4
(22) Date of filing: 17.11.2020
(51) Int. Cl.: B60H 1/00, F24F 13/02, F24F 13/10

(54) **VEHICLE DUCT DEVICE**

(30) Priority: 20.11.2019 JP 2019209227
(71) Applicant: Valeo Japan Co., Ltd., Kumagaya-Shi SAITAMA 360-0193 (JP)
(72) Inventor: NAGANO, Hideki, Kumagaya-shi Saitama 360-0193 (JP)
(74) Representative: Valeo Systèmes Thermiques
(86) International application number: PCT/JP2020/042751
(87) International publication number: WO 2021/100689

(57) **Abstract**

Two air volume adjusting doors driven by a single drive source can be simultaneously adjusted in both a fully opened position and a fully closed position. A vehicle-use duct device (30) includes a first air volume adjusting door (70) that is driven by a drive source (100) and opens and closes a first air feed passage (41), a second air volume adjusting door (80) that opens and closes a second air feed passage (51), a biasing mechanism (110) provided between the doors (70, 80), an angle restricting portion (120) that restricts a pivoting of the second air volume adjusting door (80) with respect to the first air volume adjusting door (70) to a constant angle (θ) in a first pivoting direction (R1), and a full opening regulating portion (132) that regulates a fully opened position of the second peripheral wall (81). The biasing mechanism (110) can bias in a direction such that the second air volume adjusting door (80) attempts to pivot in the first pivoting direction (R1) with respect to the first air volume adjusting door (70).

## Description

### Technical Field

The present invention relates to a vehicle-use duct device wherein two air volume adjusting doors are driven in such a way as to open and close using a single drive source.

### Background Art

Many vehicles include a vehicle-use air conditioning device for adjusting temperature by taking in external air or internal air. A common vehicle-use air conditioning device includes a vehicle-use duct device in order that a volume of air discharged can be adjusted in accordance with a sitting position or a sitting state of each occupant. The vehicle-use duct device has a multiple of independent ducts and an air volume adjusting door inside each duct. Air whose temperature has been adjusted by a main body portion of the air conditioning device contributes to the comfort of an occupant by being discharged into a vehicle cabin through each duct. The air volume adjusting doors can adjust a flow rate of air flowing along an air feed passage of each duct.

For example, a vehicle-use duct device that distributes air into two systems has a first duct configuring a first air feed passage, a second duct configuring a second air feed passage, two air volume adjusting doors that can individually adjust volumes of air flowing along the first air feed passage and the second air feed passage, and two drive sources that individually drive the air volume adjusting doors. According to this kind of vehicle-use duct device, differing volumes of air can be caused to flow along the two air feed passages, because of which air can also be blown toward only a seat in which an occupant is sitting.

However, as two drive sources are included in order to individually drive the two air volume adjusting doors, there is room for improvement in terms of a layout in which the drive sources are disposed in a limited space in a vehicle, and in terms of a cost of the vehicle-use air conditioning device. In recent years, therefore, development of technology such that a multiple of air volume adjusting doors are driven using a single drive source has been advancing, and there is, for example, technology disclosed in Patent Literature 1.

The vehicle-use duct device known in Patent Literature 1 is technology relating to a vent discharge port (also called a face discharge port) for discharging conditioned air to mainly an upper body of an occupant. The vent discharge port is divided into three in a left-right direction. To describe in detail, the vehicle-use duct device has one rotary shaft driven by one motor, two air volume adjusting doors that can rotate relatively with respect to the rotary shaft, and which are installed one each in a right distribution duct and a left distribution duct, two stoppers that regulate a pivoting of the two air volume adjusting doors in mutually opposite directions, two springs that constantly bias the two air volume adjusting doors toward the respective stoppers, and two arms fixed to the rotary shaft in such a way as to cause the two air volume adjusting doors to pivot in mutually opposite directions.

The vehicle-use duct device has a state wherein both of the two air volume adjusting doors are in a fully opened positioned (a neutral position) as a reference. By the rotary shaft being turned clockwise by the motor, the first air volume adjusting door only is closed using the first arm, and a volume of air in the right distribution duct can be adjusted. Also, by the rotary shaft being turned counterclockwise, the second air volume adjusting door only is closed using the second arm, and a volume of air in the left distribution duct can be adjusted.

### Citation List

### Patent Literature

Patent Literature 1: JP-UM-A-5-026532

### Summary of Invention

### Technical Problem

The vehicle-use duct device of Patent Literature 1 is such that the two air volume adjusting doors cannot be adjusted to a fully closed position simultaneously. In addition to a right distribution duct and a left distribution duct, in general, a vehicle-use duct device commonly has a defrost discharge port, which supplies blown air toward a windshield, and a foot discharge port, which supplies conditioned air toward the feet of an occupant. Further, for example, there is a demand for a realization of a discharge mode (a foot discharge mode) wherein warm air is supplied to the feet of an occupant by the foot discharge port being opened, while a flow of blown air is prohibited by the vent discharge port and the defrost discharge port being blocked off. That is, there is a demand to enable two air volume adjusting doors provided one each in a right distribution duct and a left distribution duct communicating with the vent discharge port to be adjusted to a fully closed position simultaneously, thereby being compatible with various discharge modes.

The invention has an object of providing technology such that two air volume adjusting doors can be driven by a single drive source in a vehicle-use duct device, and the two air volume adjusting doors can be simultaneously adjusted in both a fully opened position and a fully closed position.

### Solution to Problem

In the following description, reference signs in the attached drawings are shown in parentheses in order to facilitate understanding of the invention, but this does not mean that the invention is thereby limited to forms shown in the drawings.

The invention provides a vehicle-use duct device (30, 30A, 30B), including a first duct (42, 42A, 42B) configuring a first air feed passage (41), a second duct (52, 52A, 52B) configuring a second air feed passage (51), a first air volume adjusting door (70, 70A), having an arc form first peripheral wall (71, 71A) centered on a first axial line (CL1) that intersects a longitudinal direction of the first duct (42, 42A, 42B), that can fully open and fully close the first air feed passage (41) using the first peripheral wall (71, 71A), which pivots in a first pivoting direction (R1) and a second pivoting direction (R2) on a side opposite to that of the first pivoting direction (R1) centered on the first axial line (CL1), a second air volume adjusting door (80, 80A), having an arc form second peripheral wall (81, 81A) centered on a second axial line (CL2) that intersects a longitudinal direction of the second duct (52, 52A, 52B) and is parallel to the first axial line (CL1), that can fully open and fully close the second air feed passage (51) using the second peripheral wall (81, 81A), which pivots in the first pivoting direction (R1) and the second pivoting direction (R2) centered on the second axial line (CL2), a drive source (100) that invests the first air volume adjusting door (70, 70A) with a pivoting force in the first pivoting direction (R1) and the second pivoting direction (R2), a biasing mechanism (110, 210) that is provided between the first air volume adjusting door (70, 70A) and the second air volume adjusting door (80, 80A) and can bias in a direction such that the second air volume adjusting door (80, 80A) attempts to pivot in the first pivoting direction (R1) with respect to the first air volume adjusting door (70, 70A), an angle restricting portion (120) that restricts a position of the second air volume adjusting door (80, 80A) with respect to the first air volume adjusting door (70, 70A) in such a way as not to exceed a preset constant angle (θ) in the first pivoting direction (R1), and a full opening regulating portion (132) that regulates a fully opened position of the second peripheral wall (81, 81A) with respect to the second air feed passage (51) by the second air volume adjusting door (80, 80A) that has pivoted in the first pivoting direction (R1) coming into contact.

Preferably, the second axial line (CL2) is positioned to be concentric with the first axial line (CL1), and the biasing mechanism (110, 210) is configured of a helical torsion screw (111) centered on the first axial line (CL1) and the second axial line (CL2), a first engagement portion (112, 212) that engages a first arm portion (111b) included in a winding start end of the helical torsion screw (111) with the first air volume adjusting door (70, 70A), and a second engagement portion (113, 213) that engages a second arm portion (111c) included in a winding ending end of the helical torsion screw (111) with the second air volume adjusting door (80, 80A).

Preferably, the first duct (42, 42A, 42B) has a first storage chamber (91) that bulges outward from the first air feed passage (41) and enables the first peripheral wall (71, 71A) that is in a position such as to fully open the first air feed passage (41) to be stored, and the second duct (52, 52A, 52B) has a second storage chamber (92) that bulges outward from the second air feed passage (51) and enables the second peripheral wall (81, 81A) that is in a position such as to fully open the second air feed passage (51) to be stored.

Preferably, the first duct (42A, 42B) is bent in a pivoting direction of the first air volume adjusting door (70A), the second duct (52A, 52B) is bent in a pivoting direction of the second air volume adjusting door (80A), the first air volume adjusting door (70A) is positioned in a bent region (Q1) of the first duct (42A, 42B), the second air volume adjusting door (80A) is positioned in a bent region (Q2) of the second duct (52A), and sizes (H1, H2) and angles of bending (α1, α2) of the first duct (42A, 42B) and the second duct (52A, 52B) respectively are set to sizes such that respective arc lengths (L11, L12) of the first peripheral wall (71A) and the second peripheral wall (81A), which are of arc forms, are identical. Advantageous Effects of Invention

Two air volume adjusting doors can be driven by a single drive source in a vehicle-use duct device, and the two air volume adjusting doors can be simultaneously adjusted in both a fully opened position and a fully closed position.

### Brief Description of Drawings

[Fig. 1] Fig. 1 is a drawing schematically showing a vehicle in which a vehicle-use duct device according to a first working example is mounted.
[Fig. 2] Fig. 2 is a plan view of the vehicle-use duct device shown in Fig. 1.
[Fig. 3] Fig. 3 is a sectional view along a 3-3 line of Fig. 2.
[Fig. 4] Fig. 4 is a perspective view wherein a first air volume adjusting door, a second air volume adjusting door, a second air volume adjusting door, a biasing mechanism, and an angle restricting portion shown in Fig. 3 are disassembled.
[Fig. 5] Fig. 5 (a) is a sectional view (omitting the angle restricting portion) along a 5a-5a line of Fig. 2, and Fig. 5(b) is a sectional view (omitting the angle restricting portion) along a 5b-5b line of Fig. 2.
[Fig. 6] Fig. 6 is a configuration drawing wherein a relationship between the first air volume adjusting door, the second air volume adjusting door, the biasing mechanism, and the angle restricting portion shown in Fig. 4 are seen along a first axial line and a second axial line.
[Fig. 7] Fig. 7 is an illustration of an action when the first air volume adjusting door and the second air volume adjusting door shown in Fig. 5 are both in a fully opened state.
[Fig. 8] Fig. 8 is an illustration of an action when the second air volume adjusting door shown in Fig. 7 is maintained in the fully opened state, and the first air volume adjusting door has attained a fully closed state by pivoting counterclockwise.
[Fig. 9] Fig. 9 is an illustration of an action when the first air volume adjusting door has attained the fully opened state and the second air volume adjusting door has attained the fully closed state by the first air volume adjusting door and the second air volume adjusting door shown in Fig. 7 both pivoting clockwise.
[Fig. 10] Fig. 10 is an illustration of an action when the first air volume adjusting door and the second air volume adjusting door shown in Fig. 9 have both attained the fully closed state by pivoting further clockwise.
[Fig. 11] Fig. 11 is a drawing of a modification of the biasing mechanism shown in Fig. 6.
[Fig. 12] Fig. 12(a) is a sectional view of a periphery of a first air volume adjusting door of a vehicle-use duct device according to a second working example seen from a direction along the first axial line (corresponding to the sectional position of Fig. 5 (a)), and Fig. 12 (b) is a sectional view of a periphery of a second air volume adjusting door seen from a direction along the second axial line (corresponding to the sectional position of Fig. 5(b)).
[Fig. 13] Fig. 13 is an illustration of an action when the first air volume adjusting door and the second air volume adjusting door shown in Fig. 12 are both in a fully opened state.
[Fig. 14] Fig. 14 is an illustration of an action when the second air volume adjusting door shown in Fig. 13 is maintained in the fully opened state, and the first air volume adjusting door has attained a fully closed state by pivoting clockwise.
[Fig. 15] Fig. 15 is an illustration of an action when the first air volume adjusting door has attained the fully opened state and the second air volume adjusting door has attained the fully closed state by the first air volume adjusting door and the second air volume adjusting door shown in Fig. 13 both pivoting counterclockwise.
[Fig. 16] Fig. 16 is an illustration of an action when the first air volume adjusting door and the second air volume adjusting door shown in Fig. 15 have both attained the fully closed state by pivoting further clockwise.
[Fig. 17] Fig. 17(a) is a sectional view of a periphery of a first air volume adjusting door of a vehicle-use duct device according to a modification (a third modified configuration) of the second working example seen from a direction along the first axial line (corresponding to the sectional position of Fig. 12(a)), and Fig. 17(b) is a sectional view of a periphery of a second air volume adjusting door seen from a direction along the second axial line (corresponding to the sectional position of Fig. 12(b)).

### Description of Embodiments

An embodiment of the invention will be described hereafter, based on the attached drawings. A form shown in the attached drawings is one form of the invention, and the invention is not limited to this form. In the description, left and right indicate left and right with an occupant of a vehicle as a reference, and front and rear indicate front and rear with a direction of travel of the vehicle as a reference. Also, "Fr" in the drawings indicates "front", "Rr" indicates "rear", "Le" indicates "left" as seen from an occupant, "Ri" indicates "right" as seen from an occupant, "Up" indicates "up", and "Dn" indicates "down"

### First Working Example

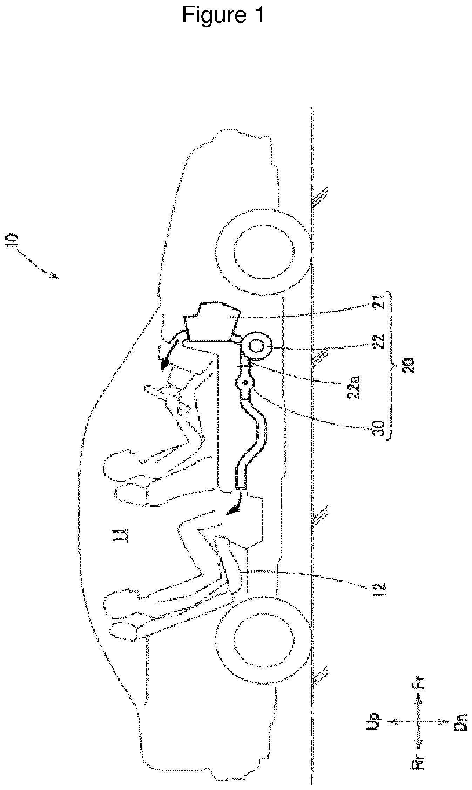

A vehicle-use duct device 30 of a first working example will be described, while referring to Fig. 1 to Fig. 10. As shown in Fig. 1, a vehicle-use air conditioning device 20 that regulates (conditions) a temperature of air inside a vehicle cabin 11 is mounted in a vehicle 10 such as a passenger car. The vehicle-use air conditioning device 20 has an air conditioning device main body unit 21, which can regulate (condition) the temperature of air blown from an unshown upstream side blower and supply the air into the vehicle cabin 11 from a multiple of discharge ports, a downstream side blower 22, which sucks in air whose temperature has been regulated (whose temperature has been conditioned) in the air conditioning device main body unit 21 and sends the air to a downstream side, and the vehicle-use duct device 30 (hereafter abbreviated as the "duct device 30"), which is connected to an exhaust port 22a of the downstream side blower 22 and extends toward a rear seat 12.

One portion of air whose temperature has been regulated by the air conditioning device main body unit 21 is sent toward the rear seat 12 by the downstream side blower 22 and the duct device 30. Commonly known components can be employed as the air conditioning device main body unit 21 and the downstream side blower 22.

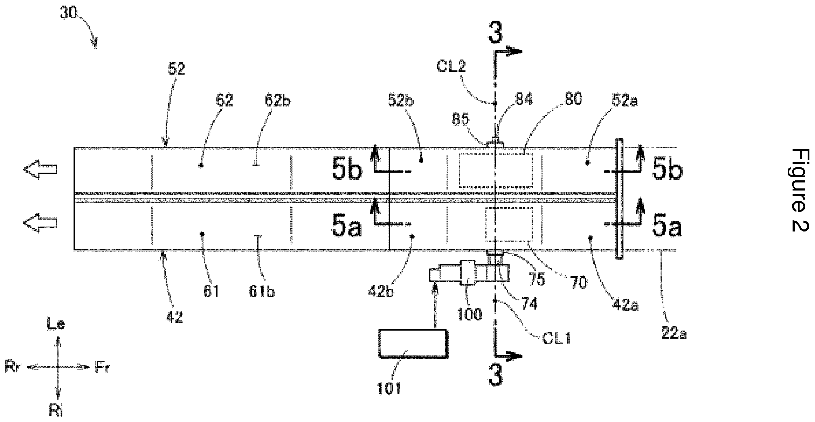

As shown in Fig. 2, the duct device 30 is long in a vehicle front-rear direction. In the first working example, a longitudinal direction of the duct device 30 coincides with the front-rear direction of the vehicle 10 (refer to Fig. 1), meaning that the front-rear direction and the longitudinal direction are the same direction.

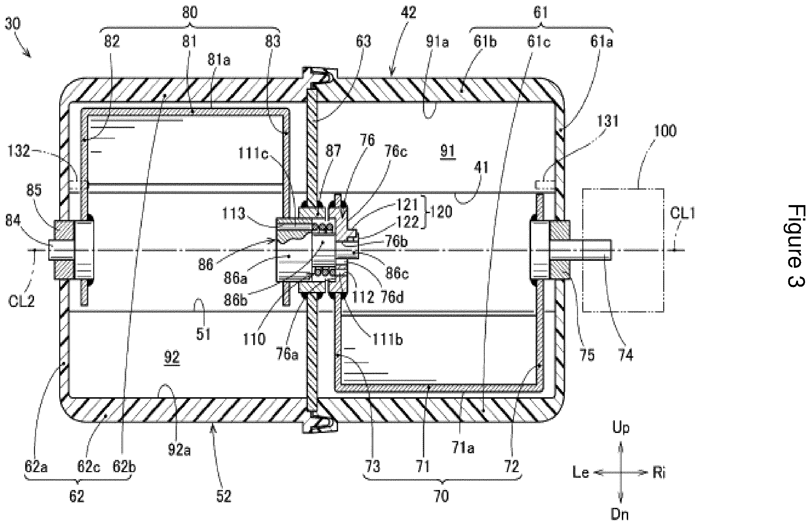

As shown in Fig. 2 and Fig. 3, the duct device 30 has a first duct 42 configuring a first air feed passage 41, a second duct 52 configuring a second air feed passage 51, a first air volume adjusting door 70, which can fully open and fully close the first air feed passage 41, and a second air volume adjusting door 80, which can fully open and fully close the second air feed passage 51.

The first duct 42 and the second duct 52 are positioned in a widthwise center of the vehicle 10 (refer to Fig. 1), and extend approximately horizontally toward the rear of the vehicle 10 from the exhaust port 22a of the downstream side blower 22.

A portion of the first duct 42 connected to the exhaust port 22a of the downstream side blower 22 is called an upstream portion 42a, and a portion farther to a downstream side than the first air volume adjusting door 70 from the upstream portion 42a is called a downstream portion 42b. Air expelled from the exhaust port 22a of the downstream side blower 22 flows from the upstream portion 42a of the first duct 42 toward the downstream portion 42b.

Also, a portion of the second duct 52 connected to the exhaust port 22a of the downstream side blower 22 is called an upstream portion 52a, and a portion farther to a downstream side than the second air volume adjusting door 80 from the upstream portion 52a is called a downstream portion 52b. Air expelled from the exhaust port 22a of the downstream side blower 22 flows from the upstream portion 52a of the second duct 52 toward the downstream portion 52b.

The first duct 42 and the second duct 52 are disposed parallel to each other in a widthwise direction of the vehicle, and are configured integrally. When looking at the duct device 30 from the rear side of the vehicle 10, the first duct 42 is positioned on the right side, and the second duct 52 is positioned on the left side. Air that has passed through the first air feed passage 41 is discharged toward a right side portion of the rear seat 12 (refer to Fig. 1). Air that has passed through the second air feed passage 51 is discharged toward a left side portion of the rear seat 12.

To describe more specifically, the first duct 42 and the second duct 52 are configured integrally using, for example, a structure wherein a first duct half body 61, a second duct half body 62, and a partitioning wall portion 63 are combined, as shown in Fig. 3. The first duct half body 61 and the second duct half body 62 are members of an approximate U-form that are opened opposing each other in the widthwise direction of the vehicle 10. An opened end of the first duct half body 61 and an opened end of the second duct half body 62 are partitioned by the partitioning wall portion 63, which is of a longitudinal plate form.

The first duct half body 61 is formed of a longitudinal plate form first side plate 61a, which corresponds to a bottom plate of the U-form, a transverse plate form first upper plate 61b, which extends from an upper end of the first side plate 61a toward the opened end of the second duct half body 62, and a transverse plate form first lower plate 61c, which extends from a lower end of the first side plate 61a toward the opened end of the second duct half body 62.

The second duct half body 62 is formed of a longitudinal plate form second side plate 62a, which corresponds to a bottom plate of the U-form, a transverse plate form second upper plate 62b, which extends from an upper end of the second side plate 62a toward the opened end of the first duct half body 61, and a transverse plate form second lower plate 62c, which extends from a lower end of the second side plate 62a toward the opened end of the first duct half body 61.

As a result of this, the first duct 42, which has a rectangular cross-section, is configured of the first duct half body 61 and the partitioning wall portion 63. The second duct 52, which has a rectangular cross-section, is configured of the second duct half body 62 and the partitioning wall portion 63. The first air feed passage 41 is an internal space of the first duct 42. The second air feed passage 51 is an internal space of the second duct 52.

A straight line CL1 that intersects the longitudinal direction of the first duct 42 is called a "first axial line CL1". A straight line CL2 that intersects the longitudinal direction of the second duct 52, and is parallel to the first axial line CL1, is called a "second axial line CL2". The first axial line CL1 and the second axial line CL2 are, for example, horizontal lines that extend in the widthwise direction of the vehicle. Preferably, the second axial line CL2 is positioned to be concentric with the first axial line CL1.

As shown in Fig. 3 to Fig. 5, the first air volume adjusting door 70 and the second air volume adjusting door 80 are configured of so-called rotary doors wherein arc form peripheral walls 71 and 81 respectively pivot. The air volume adjusting doors 70 and 80 are also called air volume adjusting dampers.

The first air volume adjusting door 70 is an integrated component formed of the one first peripheral wall 71 and two first side walls 72 and 73. The first peripheral wall 71 is configured of an arc form (curved) plate centered on the first axial line CL1. By pivoting in a first pivoting direction R1 and a second pivoting direction R2 centered on the first axial line CL1, the first peripheral wall 71 can fully open and fully close the first air feed passage 41, and can adjust a volume of air flowing along the first air feed passage 41.

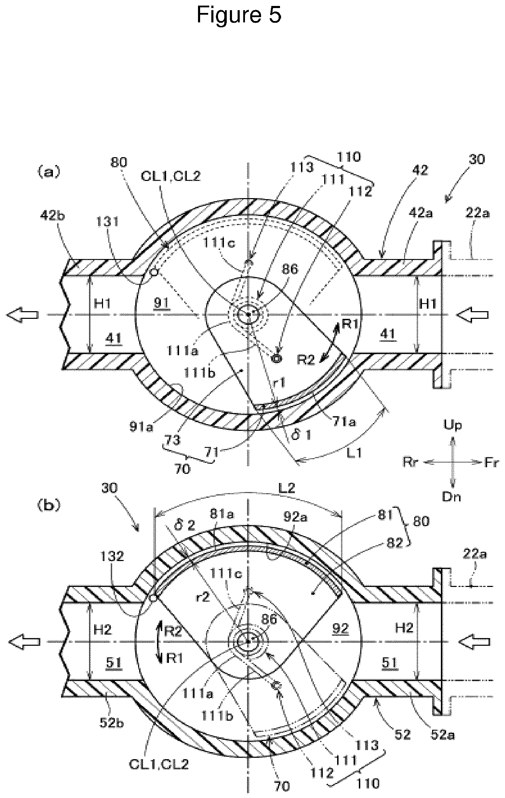

Herein, in the first working example, the first pivoting direction R1 and the second pivoting direction R2 are defined as follows. When upstream in a direction of flow of air flowing along the first air feed passage 41 is taken to be on the right, and the first duct 42 is seen from the first axial line CL1 direction, as shown in Fig. 5(a), a counterclockwise turning direction R1 is called the "first pivoting direction R1". An opposite direction R2 with respect to the first pivoting direction R1 is called the "second pivoting direction R2".

The two first side walls 72 and 73 are flat plate form members integrally included in the first peripheral wall 71 on either axial direction side along the first axial line CL1. For example, the two first side walls 72 and 73 are formed as approximate circular sectors seen from a direction along the first axial line CL1. Of the two first side walls 72 and 73, the first side wall 72 positioned toward the first side plate 61a of the first duct half body 61 has a first shaft 74 centered on the first axial line CL1. The first shaft 74 is supported in such a way as to be able to pivot by a first bearing 75 provided in the first side plate 61a. Of the two first side walls 72 and 73, the other first side wall 73 has a disk form boss portion 76 centered on the first axial line CL1. The boss portion 76 has a depressed portion 76a, recessed in a face on a side opposite to that of a face opposing the first shaft 74, and a shaft hole 76b that passes through a bottom of the depressed portion 76a. The depressed portion 76a and the shaft hole 76b are both centered on the first axial line CL1.

The second air volume adjusting door 80 is an integrated component formed of the one second peripheral wall 81 and two second side walls 82 and 83. The second peripheral wall 81 is configured of an arc form (curved) plate centered on the second axial line CL2. By pivoting in the first pivoting direction R1 and the second pivoting direction R2 centered on the second axial line CL2, the second peripheral wall 81 can fully open and fully close the second air feed passage 51, and can adjust a volume of air flowing along the second air feed passage 51.

The two second side walls 82 and 83 are flat plate form members integrally included in the second peripheral wall 81 on either axial direction side along the second axial line CL2. For example, the two second side walls 82 and 83 are formed as approximate circular sectors seen from a direction along the second axial line CL2. Of the two second side walls 82 and 83, the second side wall 82 positioned toward the second side plate 62a of the second duct half body 62 has a second shaft 84 centered on the second axial line CL2. The second shaft 84 is supported in such a way as to be able to pivot by a second bearing 85 provided in the second side plate 62a. Of the two second side walls 82 and 83, the other second side wall 83 has a third shaft 86 centered on the second axial line CL2.

The third shaft 86 is formed of a large-diameter base portion 86a provided integrated with the second side wall 82 of the second air volume adjusting door 80, an intermediate portion 86b that extends from the base portion 86a toward the boss portion 76 of the first volume adjusting door 70, and a leading end portion 86c that extends from the intermediate portion 86b in such a way as to pass through the boss portion 76. The intermediate portion 86b is of a smaller diameter than the base portion 86a. The leading end portion 86c is of a smaller diameter than the intermediate portion 86b. The base portion 86a, the intermediate portion 86b, and the leading end portion 86c may also all be of the same diameter.

The base portion 86a is supported in such a way as to be able to pivot by a third bearing 87 provided in the partitioning wall portion 63. The intermediate portion 86b is positioned in an interior of the depressed portion 76a of the boss portion 76. The leading end portion 86c passes through the shaft hole 76b of the boss portion 76, and is fitted in such a way as to be able to rotate relatively. As a result of this, the boss portion 76 is supported in such a way as to be able to pivot by the third bearing 87 via the third shaft 86. As is clear from the above description, the first air volume adjusting door 70 is supported by the first duct 42 in such a way as to be able to pivot in the first pivoting direction R1 and the second pivoting direction R2, centered on the first axial line CL1. The second air volume adjusting door 80 is supported by the second duct 52 in such a way as to be able to pivot in the first pivoting direction R1 and the second pivoting direction R2, centered on the second axial line CL2.

As shown in Fig. 5(a), the first duct 42 has a first storage chamber 91 that bulges outward from the first air feed passage 41. The first storage chamber 91 is a space positioned between the upstream portion 42a and the downstream portion 42b of the first duct 42, and bulges in an arc form centered on the first axial line CL1. The first storage chamber 91 having this kind of configuration can store the first peripheral wall 71 when in a position such as to fully open the first air feed passage 41.

In the same way, as shown in Fig. 5(b), the second duct 52 has a second storage chamber 92 that bulges outward from the second air feed passage 51. The second storage chamber 92 is a space positioned between the upstream portion 52a and the downstream portion 52b of the second duct 52, and bulges in an arc form centered on the second axial line CL2. The second storage chamber 92 having this kind of configuration can store the second peripheral wall 81 when in a position such as to fully open the second air feed passage 51.

To describe in detail, forms and sizes of the first duct 42 and the second duct 52 are identical to each other. For example, when the first duct 42 and the second duct 52 are seen from the directions of the axial lines CL1 and CL2 respectively, as shown in Fig. 5(a) and Fig. 5(b), a height H1 of an inner side of the first duct 42 (a height H1 of the first air feed passage 41) and a height H2 of an inner side of the second duct 52 (a height H2 of the second air feed passage 51) are identical.

A radius r1 of the first peripheral wall 71 centered on the first axial line CL1 and a radius r2 of the second peripheral wall 81 centered on the second axial line CL2 are identical. A dimension that is twice the radii r1 and r2 of the peripheral walls 71 and 81 respectively is greater than the height direction dimensions H1 and H2 of the inner sides of the ducts 42 and 52 respectively. Diameters of the first storage chamber 91 and the second storage chamber 92 centered on the axial lines CL1 and CL2 respectively are set to be slightly greater than twice the radii r1 and r2 of the peripheral walls 71 and 81 respectively. In order that the peripheral walls 71 and 81 can pivot, there are slight gaps δ1 and δ2 between inner peripheral faces 91a and 92a configuring the storage chambers 91 and 92 respectively and outer peripheral faces 71a and 81a of the peripheral walls 71 and 81 respectively. An arc length L1 of the outer peripheral face 71a of the first peripheral wall 71 is smaller than an arc length L2 of the outer peripheral face 81a of the second peripheral wall 81.

A summary of the descriptions of the first storage chamber 91 and the second storage chamber 92 is as follows. The first peripheral wall 71 or the second peripheral wall 81 in a fully closed position is preferably of a size such that a whole of the air feed passages 41 and 51 respectively can be closed. The peripheral walls 71 and 81 set to this size come into contact with inner faces of the ducts 42 and 52 respectively when changing from the fully closed position to a fully opened position.

In response to this, the first working example is such that the peripheral walls 71 and 81 in the fully opened position are stored in the storage chambers 91 and 92 respectively. This means that despite the peripheral walls 71 and 81 being of a size such that the air feed passages 41 and 51 respectively can be fully closed, the peripheral walls 71 and 81 do not come into contact with the inner faces of the ducts 42 and 52 respectively when changing from the fully closed position to the fully opened position. The ducts 42 and 52 can reliably be caused to change from the fully closed position to the fully opened position.

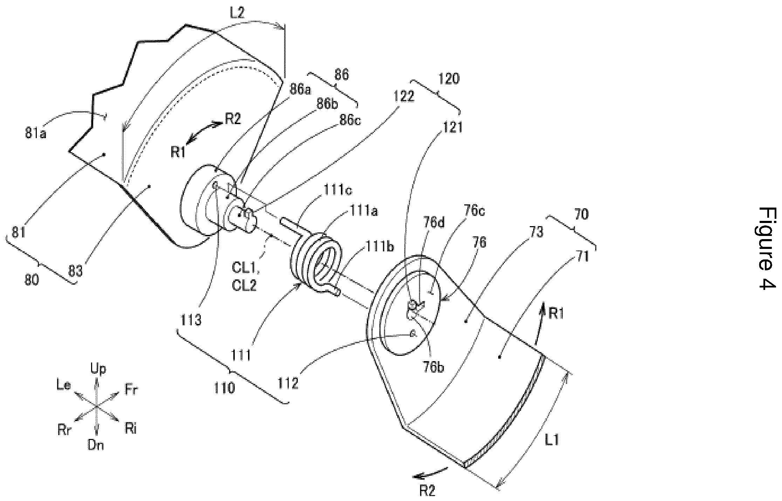

Furthermore, the duct device 30 has a drive source 100, a biasing mechanism 110, an angle restricting portion 120, a full closing regulating portion 131, and a full opening regulating portion 132, as shown in Fig. 3 and Fig. 4.

As shown in Fig. 3, the drive source 100 invests the first air volume adjusting door 70 with a pivoting force in the first pivoting direction R1 and the second pivoting direction R2. The drive source 100 is configured of an actuator such as a stepping motor provided in, for example, a side portion of the first duct 42, and operates based on an electrical signal sent from a control unit 101 (refer to Fig. 2) based on an operation by an occupant, a set temperature, or the like. More specifically, the first shaft 74 of the first air volume adjusting door 70 is coupled to a drive shaft (not shown) of the drive source 100.

As shown in Fig. 3 and Fig. 4, the biasing mechanism 110 is provided between the first air volume adjusting door 70 and the second air volume adjusting door 80 so that the second air volume adjusting door 80 can follow a pivoting of the first air volume adjusting door 70 and the second air volume adjusting door 80 can be biased to pivot in the first pivoting direction R1 with respect to the first air volume adjusting door 70.

The biasing mechanism 110 is configured of, for example, a helical torsion spring 111 (a biasing member 111), a first engagement portion 112, and a second engagement portion 113.

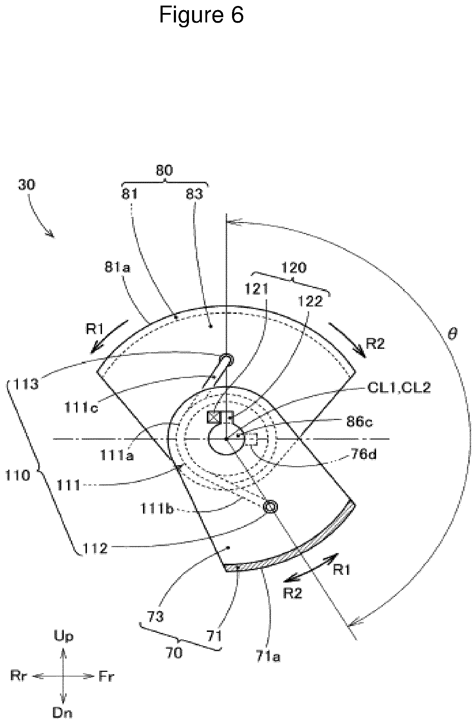

In order to facilitate understanding of the description of the biasing mechanism 110, one portion of the helical torsion spring 111 shown in Fig. 3 and Fig. 4 is represented modified in Figs. 5(a) and 5 (b) and Fig. 6. Note that the helical torsion spring 111 can be of the configuration shown in Figs. 5 (a) and 5(b) and Fig. 6.

The helical torsion spring 111 has a coil 111a centered on the first axial line CL1 and the second axial line CL2. The coil 111a is wound around the intermediate portion 86b, and is housed in the depressed portion 76a of the boss portion 76 together with the intermediate portion 86b. The helical torsion spring 111 has a first arm portion 111b at a winding start end, and a second arm portion 111c at a winding ending end. The first arm portion 111b extends toward the boss portion 76 while following the first axial line CL1. The second arm portion 111c extends toward the base portion 86a while following the second axial line CL2.

The first engagement portion 112 engages the first arm portion 111b of the helical torsion spring 111 with the first air volume adjusting door 70. For example, the first engagement portion 112 is configured of a through hole formed in the boss portion 76 along the first axial line CL1, and the first arm portion 111b is engaged by the through hole.

The second engagement portion 113 engages the second arm portion 111c of the helical torsion spring 111 with the second air volume adjusting door 80. For example, the second engagement portion 113 is configured of a through hole formed in the base portion 86a along the second axial line CL2, and the second arm portion 111c is engaged by the through hole.

As is clear from the above description, the arm portions 111b and 111c are engaged with the air volume adjusting doors 70 and 80 respectively in such a way as to follow both the first pivoting direction R1 and the second pivoting direction R2. The helical torsion coil 111 (the biasing member 111) biases the first air volume adjusting door 70 in such a way as to attempt to advance in the second pivoting direction R2, and biases the second air volume adjusting door 80 in such a way as to attempt to advance in the first pivoting direction R1. Because of this, the second air volume adjusting door 80 can reliably be biased in the first pivoting direction R1 with respect to the first air volume adjusting door 70, and a following performance of the second air volume adjusting door 80 with respect to a pivoting of the first air volume adjusting door 70 can be increased.

The biasing mechanism 110 can be configured of an extremely simple configuration wherein the arm portions 111b and 111c of the helical torsion spring 111 are simply engaged with the first engagement portion 112 and the second engagement portion 113 included in the air volume adjusting doors 70 and 80 respectively.

As shown in Fig. 3, Fig. 4, and Fig. 6, the angle restricting portion 120 restricts a position (angle) of the second air volume adjusting door 80 with respect to the first air volume adjusting door 70 in such a way as not to exceed a preset constant opening angle θ (a constant angle θ) in the first pivoting direction R1. In Fig. 5(a) and (b), the angle restricting portion 120 is omitted.

The angle restricting portion 120 is configured of, for example, a first protruding portion 121 and a second protruding portion 122. The first protruding portion 121 protrudes toward the first shaft 74 side from an end face 76c of the boss portion 76 facing the first shaft 74 side. The second protruding portion 122 protrudes radially outward from an outer peripheral face of the leading end portion 86c of the third shaft 86. To describe in detail, the leading end portion 86c of the third shaft 86 extends farther toward the first shaft 74 side than the end face 76a of the boss portion 76, and has the second protruding portion 122 in the extended portion.

As shown in Fig. 4, the shaft hole 76b has a passing groove 76d penetrating in such a way that the second protruding portion 122 can pass through. This means that when the leading end portion 86c of the third shaft 86 passes through the shaft hole 76b, the second protruding portion 122 can pass through the passing groove 76d. After the second protruding portion 122 has been caused to pass through the passing groove 76d, the second protruding portion 122 catches on the end face 76c of the boss portion 76 owing to the third shaft 86 being turned. In this way, the second protruding portion 122 of the angle restricting portion 120 also functions as a stopper for preventing a falling out.

As shown in Fig. 6, the second protruding portion 122 is positioned in a rotational path of the first protruding portion 121 centered on the first axial line CL1. Moreover, the second protruding portion 122 neighbors the first protruding portion 121 in the second pivoting direction R2 (neighbors on the right in the drawing) . That is, the position of the second protruding portion 122 with respect to the first protruding portion 121 in the rotational path of the first protruding portion 121 is set to be a position such that the second air volume adjusting door 80 can be restricted from exceeding a state of the relative constant angle θ of the second air volume adjusting door 80 with respect to the first air volume adjusting door 70 in the first pivoting direction R1. Furthermore, the second protruding portion 122 is positioned between the first protruding portion 121 and the passing groove 76d.

The biasing mechanism 110 and the angle restricting portion 120 can be assembled using the following procedure. Firstly, the coil 111a is fitted over the third shaft 86, as shown in Fig. 4. Next, the third shaft 86 and the second protruding portion 122 are caused to pass through the shaft hole 76b and the passing groove 76d, while the arm portions 111b and 111c are inserted into the engagement portions 112 and 113 respectively. Thereupon, the third shaft 86 and the second protruding portion 122 turn in the first pivoting direction R1 with respect to the shaft hole 76b and the passing groove 76d owing to the biasing force of the helical torsion spring 111. As a result of this, the second protruding portion 122 comes into contact with the first protruding portion 121, as shown in Fig. 6, and this state of contact is maintained by the biasing force of the helical torsion spring 111. The assembly work is hereby completed.

In this way, the biasing mechanism 110 and the angle restricting portion 120 can be easily and reliably assembled. Moreover, the state wherein the second protruding portion 122 is in contact with the first protruding portion 121 can reliably be maintained by the biasing force of the biasing mechanism 110 (the biasing force of the helical torsion spring 111). No rattling occurs between the first protruding portion 121 and the second protruding portion 122. As a result of this, the angle restricting portion 120 can accurately and reliably restrict the position of the second air volume adjusting door 80 with respect to the first air volume adjusting door 70 in such a way as not to exceed the constant opening angle θ in the first pivoting direction R1.

As shown in Fig. 3 and Fig. 5(a), the full closing regulating portion 131 regulates the fully closed position of the first peripheral wall 71 with respect to the first air feed passage 41 by the first air volume adjusting door 70 that has pivoted in the second pivoting direction R2 coming into contact. The full closing regulating portion 131 is included in the first duct 42. For example, the full closing regulating portion 131 is configured of a stopper, formed of a bar such as a round bar, extending from the first side plate 61a of the first duct half body 61 to the first storage chamber 91 along the first axial line CL1.

As shown in Fig. 3 and Fig. 5(b), the full opening regulating portion 132 regulates the fully opened position of the second peripheral wall 81 with respect to the second air feed passage 51 by the second air volume adjusting door 80 that has pivoted in the first pivoting direction R1 coming into contact. The full opening regulating portion 132 is included in the second duct 52. For example, the full opening regulating portion 132 is configured of a stopper, formed of a bar such as a round bar, extending from the second side plate 62a of the second duct half body 62 to the second storage chamber 92 along the second axial line CL2.

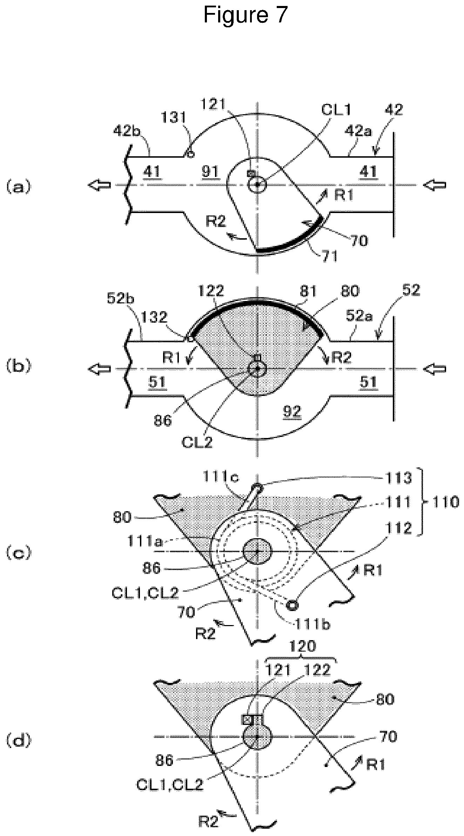

Next, actions of the duct device 30 of the first working example will be described, while referring to Fig. 7 to Fig. 10.

Figs. 7 (a) to (d) are illustrations of actions when the first air volume adjusting door 70 and the second air volume adjusting door 80 are both in the fully opened state, and correspond to Figs. 5(a) and (b) and Fig. 6.

Fig. 7(a) shows a relationship between the first air volume adjusting door 70 in the fully opened state and the full closing regulating portion 131, and corresponds to Fig. 5(a). The drive source 100 (refer to Fig. 3) is maintaining the fully opened position of the first air volume adjusting door 70. The first peripheral wall 71 in the fully opened state is positioned near the upstream side in a lower portion of the first storage chamber 91.

Fig. 7(b) shows a relationship between the second air volume adjusting door 80 in the fully opened state and the full opening regulating portion 132, and corresponds to Fig. 5(b). The second peripheral wall 81 in the fully opened state is positioned in an upper center of the second storage chamber 92, and further pivoting in the first pivoting direction R1 is restricted by the full opening regulating portion 132.

Fig. 7 (c) shows a state of the biasing mechanism 110 when the first air volume adjusting door 70 and the second air volume adjusting door 80 are both in the fully opened state, and corresponds to Fig. 6. The biasing mechanism 110 is in a neutral position, and biases the second air volume adjusting door 80 in the first pivoting direction R1 with respect to the first air volume adjusting door 70.

Fig. 7 (d) shows a state of the angle restricting portion 120 when the first air volume adjusting door 70 and the second air volume adjusting door 80 are both in the fully opened state, and corresponds to Fig. 6. The angle restricting portion 120 is restricting the second air volume adjusting door 80 in such a way as not to extend farther in the first pivoting direction R1 with respect to the first air volume adjusting door 70. That is, the second protruding portion 122 is in contact with the first protruding portion 121. This means that despite the second air volume adjusting door 80 being biased in the first pivoting direction R1, the fully opened state is being maintained.

In this way, the fully opened position of the second air volume adjusting door 80 is regulated by the full opening regulating portion 132 when both the first peripheral wall 71 and the second peripheral wall 81 are in the fully opened position. Moreover, the second air volume adjusting door 80 is biased by the biasing mechanism 110 in the first pivoting direction R1, opening with respect to the first air volume adjusting door 70. As each of the air volume adjusting doors 70 and 80 is in the fully opened state, flow path areas of the first air feed passage 41 and the second air feed passage 51 are both maximized. Because of this, flow rates of air flowing along the first air feed passage 41 and the second air feed passage 51 can be maximized, and the inside of the vehicle cabin 11 (refer to Fig. 1) can be cooled in a short time.

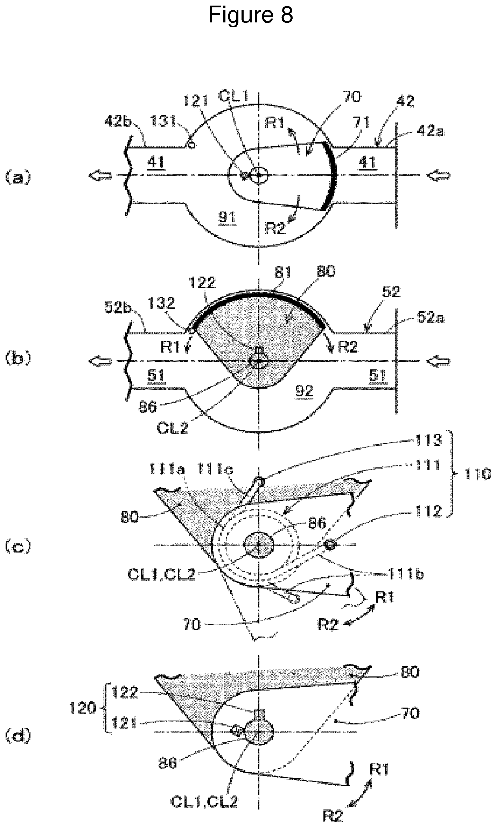

Subsequently, the drive source 100 (refer to Fig. 3) causes the first air volume adjusting door 70 to pivot in the first pivoting direction R1 (a counterclockwise direction in the drawing), whereby the first air feed passage 41 is gradually closed, eventually being fully closed. A result of this is shown in Figs. 8(a) to (d).

The first peripheral wall 71 fully closes the upstream side of the first air feed passage 41, as shown in Fig. 8(a). Pivoting of the second peripheral wall 81 in the first pivoting direction R1 is restricted by the full opening regulating portion 132, as shown in Fig. 8(b). Because of this, the first arm portion 111b engaged with the first engagement portion 112 of the first air volume adjusting door 70 pivots in the first pivoting direction R1 together with the first air volume adjusting door 70, as shown in Fig. 8(c). As a result of this, the biasing force of the biasing mechanism 110 increases. In this case, some variation in the fully closed position of the first peripheral wall 71 is acceptable, as it is sufficient that the first air feed passage 41 can be fully closed. Even when there is some variation in the fully closed position of the first peripheral wall 71, the fully opened position of the second peripheral wall 81 can be maintained by the second peripheral wall 81 being pressed against the full opening regulating portion 132 by the biasing force of the biasing mechanism 110. The first protruding portion 121 pivots in the first pivoting direction R1 together with the first air volume adjusting door 70, separating from the second protruding portion 122, as shown in Fig. 8(d).

In this way, the first peripheral wall 71 turns in the first pivoting direction R1, nearing the second peripheral wall 81, owing to the first air volume adjusting door 70 in the fully opened position being invested with a pivoting force in the first pivoting direction R1 by the drive source 100 (refer to Fig. 3). The flow rate of air flowing along the first air feed passage 41 can be adjusted by the first peripheral wall 71. The second peripheral wall 81 is restricted by the full opening regulating portion 132, whereby the fully opened position is maintained unchanged. That is, while the maximum flow rate of air flowing along the second air feed passage 51 is maintained by the fully opened state of the second peripheral wall 81 of the second air volume adjusting door 80 being maintained, the volume of air flowing along the first air feed passage 41 can be adjusted by the first peripheral wall 71 of the first air volume adjusting door 70 turning in the first pivoting direction R1.

Furthermore, the first peripheral wall 71 fully closes the first air feed passage 41 owing to the first air volume adjusting door 70 turning a predetermined angle in the first pivoting direction R1. The second peripheral wall 81 is restricted by the full opening regulating portion 132, whereby the fully opened position is maintained unchanged.

Meanwhile, when the first peripheral wall 71 and the second peripheral wall 81 are both in the fully opened position, as shown in Figs. 7(a) to (d), the following occurs when the drive source 100 (refer to Fig. 3) causes the first air volume adjusting door 70 to pivot in the second pivoting direction R2 (a clockwise direction in the drawing).

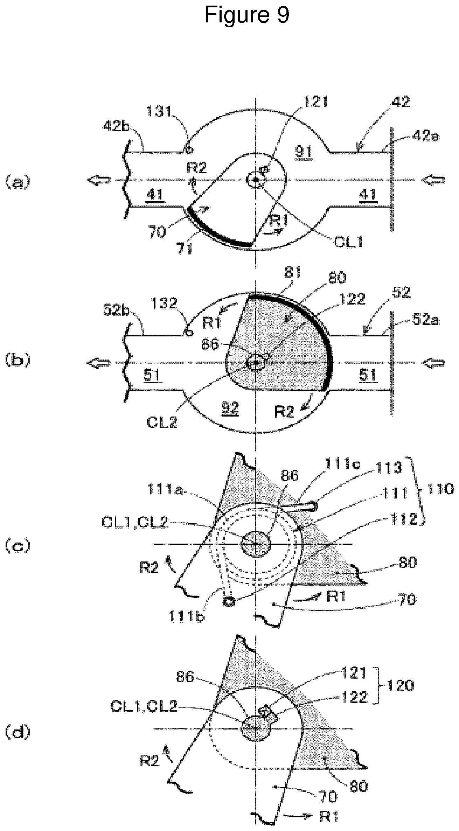

The first peripheral wall 71 of the first air volume adjusting door 70 pivots in the second pivoting direction R2, changing to a position near the downstream side in the lower portion of the first storage chamber 91, as shown in Fig. 9 (a) . At this stage, the first peripheral wall 71 is in the fully opened position. The angle restricting portion 120 changes position, as shown in Fig. 9(d). That is, the first protruding portion 121 causes the second protruding portion 122 to pivot in the second pivoting direction R2 by pivoting in the second pivoting direction R2 together with the first air volume adjusting door 70. As a result of this, the second air volume adjusting door 80 pivots in the second pivoting direction R2, as shown in Fig. 9 (b) .

A leading end in the second pivoting direction R2 of the second peripheral wall 81 of the second air volume adjusting door 80 changes position to the upstream side and the lower side in the second air feed passage 51, thereby fully closing the upstream side of the second air feed passage 51. The opening angle θ (refer to Fig. 6) of the second air volume adjusting door 80 with respect to the first air volume adjusting door 70 does not change. This means that opening angles of the first arm portion 111b and the second arm portion 111c do not change, as shown in Fig. 9(c), because of which the biasing force of the biasing mechanism 110 does not change.

In this way, while the maximum flow rate of air flowing along the first air feed passage 41 is maintained by the fully opened state of the first peripheral wall 71 of the first air volume adjusting door 70 being maintained, the volume of air flowing along the second air feed passage 51 can be adjusted by the second peripheral wall 81 of the second air volume adjusting door 80 turning in the second pivoting direction R2.

Subsequently, the following occurs when the drive source 100 (refer to Fig. 3) causes the first air volume adjusting door 70 to pivot further in the second pivoting direction R2 (a clockwise direction in the drawings).

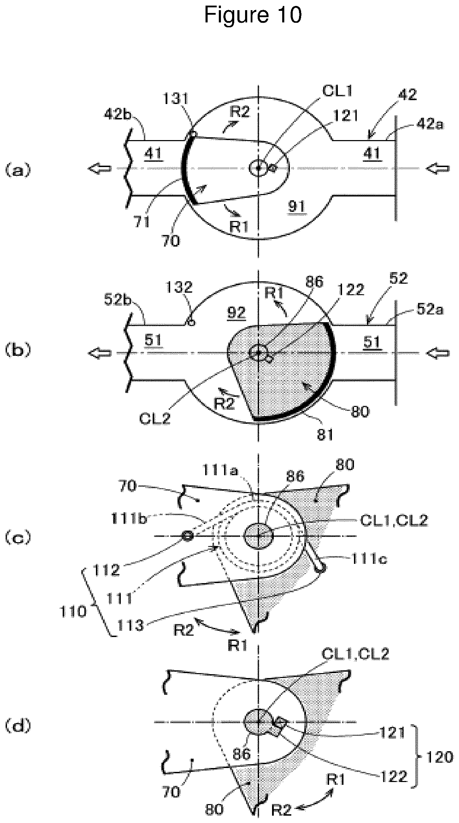

The first peripheral wall 71 of the first air volume adjusting door 70 pivots further in the second pivoting direction R2, thereby fully closing the downstream side of the first air feed passage 41, as shown in Fig. 10(a). In this state, further pivoting of the first peripheral wall 71 of the first air volume adjusting door 70 in the second pivoting direction R2 is restricted by the full closing regulating portion 131. The angle restricting portion 120 changes position, as shown in Fig. 10 (d). That is, the first protruding portion 121 causes the second protruding portion 122 to pivot in the second pivoting direction R2 by pivoting in the second pivoting direction R2 together with the first air volume adjusting door 70. As a result of this, the second air volume adjusting door 80 that is fully closed pivots further in the second pivoting direction R2, as shown in Fig. 10(b). However, the second peripheral wall 81 continues to be maintained in the state of fully closing the upstream side of the second air feed passage 51.

The opening angle θ (refer to Fig. 6) of the second air volume adjusting door 80 with respect to the first air volume adjusting door 70 does not change. This means that the opening angles of the first arm portion 111b and the second arm portion 111c do not change, as shown in Fig. 10(c), because of which the biasing force of the biasing mechanism 110 does not change.

In this way, while the fully closed state of the second peripheral wall 81 of the second air volume adjusting door 80 is maintained, the volume of air flowing along the first air feed passage 41 can be adjusted by the first peripheral wall 71 of the first air volume adjusting door 70 turning in the second pivoting direction R2.

The following occurs when the drive source 100 (refer to Fig. 3) causes the first air volume adjusting door 70 to return to the first pivoting direction R1 when the first air volume adjusting door 70 and the second air volume adjusting door 80 are in the state shown in Figs. 9 (a) to (d) or the state shown in Figs. 10(a) to (d).

For example, when the first air volume adjusting door 70 returns to the first pivoting direction R1 when the first air volume adjusting door 70 and the second air volume adjusting door 80 are in the state shown in Fig 10(a), the first protruding portion 121 shown in Fig. 10(d) pivots in the first pivoting direction R1 together with the first air volume adjusting door 70, thereby attempting to separate from the second protruding portion 122.

At this time, the first arm portion 111b engaged with the first engagement portion 112 of the first air volume adjusting door 70 pivots in the first pivoting direction R1 together with the first air volume adjusting door 70, as shown in Fig. 10 (c). A pivoting force in the first pivoting direction R1 acts from the first arm portion 111b, via the coil 111a, on the second arm portion 111c engaged with the second engagement portion 113 of the second air volume adjusting door 80. The second air volume adjusting door 80 pivots in the first pivoting direction R1 owing to the second arm portion 111c pivoting in the first pivoting direction R1. That is, the second air volume adjusting door 80 follows the first air volume adjusting door 70 owing to an action of the biasing mechanism 110. As a result of this, the first air volume adjusting door 70 and the second air volume adjusting door 80 can return to the state shown in Figs. 7 (a) to (d). Further, the first protruding portion 121 of the first air volume adjusting door 70 does not separate from the second protruding portion 122 of the second air volume adjusting door 80.

As is clear from the above description, the arc length L1 of the first peripheral wall 71 and the arc length L2 of the second peripheral wall 81 are set to sizes that satisfy all of the following four conditions.

A first condition is that the first peripheral wall 71 and the second peripheral wall 81 both attain the fully opened state, as shown in Figs. 7(a) and (b).

A second condition is that the first peripheral wall 71 attains the fully closed state and the second peripheral wall 81 attains the fully opened state, as shown in Figs. 8(a) and (b) .

A third condition is that the first peripheral wall 71 attains the fully opened state and the second peripheral wall 81 attains the fully closed state, as shown in Figs. 9(a) and (b) .

A fourth condition is that the first peripheral wall 71 and the second peripheral wall 81 both attain the fully closed state, as shown in Figs. 10(a) and (b).

To summarize the above description, the vehicle-use duct device 30 of the first working example is such that the two air volume adjusting doors 70 and 80 can be driven by the single drive source 100, as shown in Fig. 3 and Fig. 5, and both of the air volume adjusting doors 70 and 80 can be adjusted to both the fully opened position (refer to Figs. 7(a) and (b)) and the fully closed position (refer to Figs. 10 (a) and (b)). Moreover, air volume adjustment can be carried out using either one of the two air volume adjusting doors 70 and 80 while the other is maintained in the fully opened state.

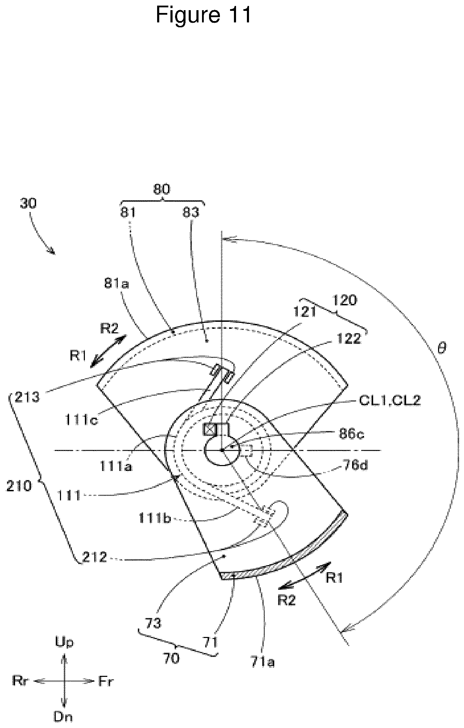

The biasing mechanism 110 shown in Fig. 6 is such that it is sufficient that the first engagement portion 112 is of a configuration wherein the first arm portion 111b can be engaged with the first air volume adjusting door 70 in each of the pivoting directions R1 and R2. In the same way, it is sufficient that the second engagement portion 113 is of a configuration wherein the second arm portion 111c can be engaged with the second air volume adjusting door 80 in each of the pivoting directions R1 and R2. For example, a biasing mechanism 210 of a modification shown in Fig. 11 is such that each of a first engagement portion 212 and a second engagement portion 213 is configured of a protruding portion.

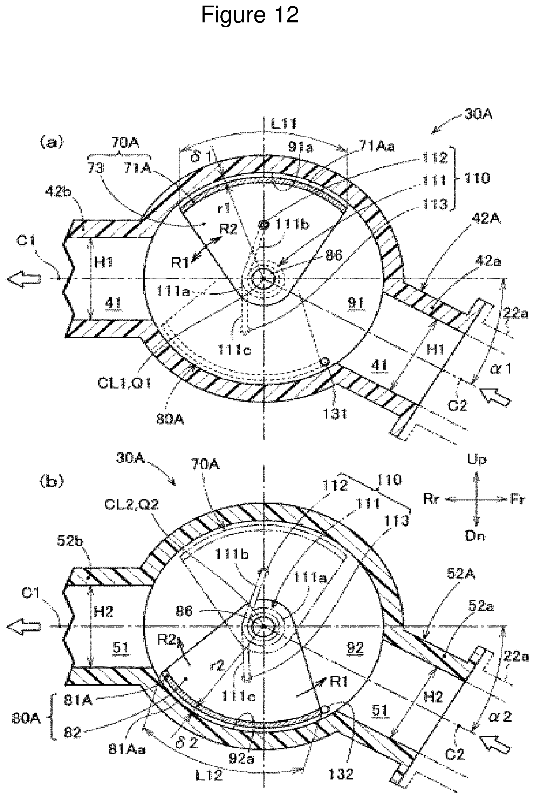

Next, a vehicle-use duct device 30A of a second working example will be described, while referring to Fig. 12 to Fig. 16.

### Second Working Example

Fig. 12 (a) shows a sectional configuration of a periphery of a first air volume adjusting door 70A of the vehicle-use duct device 30A according to the second working example seen from a direction along the first axial line CL1, and corresponds to the sectional position of Fig. 5(a).

Fig. 12 (b) shows a sectional configuration of a periphery of a second air volume adjusting door 80A of the vehicle-use duct device 30A according to the second working example seen from a direction along the second axial line CL2, and corresponds to the sectional position of Fig. 5(b).

The vehicle-use duct device 30A of the second working example is such that the following two points are changed with respect to the first working example shown in Figs. 5(a) and (b) (refer to Fig. 12(a) and Fig. 12(b)).

A first point of change is that the first duct 42 and the second duct 52 of the first working example are changed to a bent first duct 42A and second duct 52A.

A second point of change is that the first air volume adjusting door 70 and the second air volume adjusting door 80 of the first working example are changed to the first air volume adjusting door 70A and the second air volume adjusting door 80A in accordance with the change to the first duct 42A and the second duct 52A.

Other basic configurations are the same as in the vehicle-use duct device 30 according to the first working example. The same reference sign is allotted to a portion the same as in the vehicle-use duct device 30 according to the first working example, and a detailed description will be omitted.

A characteristic of the vehicle-use duct device 30A of the second working example is that owing to the first duct 42A and the second duct 52A being of a bent configuration, an arc length L11 of a first peripheral wall 71A of the first air volume adjusting door 70A and an arc length L12 of a second peripheral wall 81A of the second air volume adjusting door 80A can be set to the same size. Hereafter, the vehicle-use duct device 30A (hereafter abbreviated to the "duct device 30A") of the second working example will be described in detail.

The first duct 42A is bent in the pivoting directions R1 and R2 of the first air volume adjusting door 70A, as shown in Fig. 12(a). A bent region Q1 (a first bending point Q1) of the first duct 42A is positioned on the first axial line CL1. To describe in more detail, the upstream portion 42a and the downstream portion 42b are bent with respect to each other by a first angle of bending α1 when looking at the first duct 42A from a direction along the first axial line CL1.

To give one example, the upstream portion 42a connected to the exhaust port 22a of the downstream side blower 22 is bent in such a way as to be upwardly inclined with respect to the downstream portion 42b. This can also be said in the following way. A central line C1 of the downstream portion 42b passes through the first axial line CL1. A central line C2 of the upstream portion 42a is oriented downward with respect to the central line C1 of the downstream portion 42b, with the first axial line CL1 as an intersection point.

The second duct 52A is bent in the pivoting directions R1 and R2 of the second air volume adjusting door 80A, as shown in Fig. 12(b). A bent region Q2 (a second bending point Q2) of the second duct 52A is positioned on the second axial line CL2. To describe in more detail, the upstream portion 52a and the downstream portion 52b are bent with respect to each other by a second angle of bending α2 when looking at the second duct 52A from a direction along the second axial line CL2. The second angle of bending α2 is set to be the same as the first angle of bending α1.

To give one example, the upstream portion 52a connected to the exhaust port 22a of the downstream side blower 22 is bent in such a way as to be upwardly inclined with respect to the downstream portion 52b. This can also be said in the following way. The central line C1 of the downstream portion 52b passes through the second axial line CL2. The central line C2 of the upstream portion 52a is oriented downward with respect to the central line C1 of the downstream portion 52b, with the second axial line CL2 as an intersection point.

In the same way as in the first working example, the first storage chamber 91 centered on the first axial line CL1 connects the upstream portion 42a and the downstream portion 42b. Also, the second storage chamber 92 centered on the second axial line CL2 connects the upstream portion 52a and the downstream portion 52b.

The first air volume adjusting door 70A is such that a center of pivoting is positioned in the bent region Q1 (on the first axial line CL1) of the first duct 42A. The second air volume adjusting door 80A is such that a center of pivoting is positioned in the bent region Q2 (on the second axial line CL2) of the second duct 52A.

Furthermore, the first air volume adjusting door 70A and the second air volume adjusting door 80A are disposed with reverse orientation with respect to the first air volume adjusting door 70 and the second air volume adjusting door 80 of the first working example shown in Figs. 5 (a) and (b). That is, the first air volume adjusting door 70A is disposed oriented upward with respect to the central line C1 of the downstream portion 42b. The second air volume adjusting door 80A is disposed oriented downward with respect to the central line C1 of the downstream portion 52b. Orientations of the first pivoting direction R1 and the second pivoting direction R2 of the first air volume adjusting door 70A and the second air volume adjusting door 80A are the same as in the first working example.

In the same way as in the first working example, forms and sizes of the first duct 42A and the second duct 52A are identical to each other. For example, when the first duct 42A and the second duct 52A are seen from the directions of the axial lines CL1 and CL2 respectively, as shown in Figs. 12(a) and (b), the height H1 of an inner side of the first duct 42A (the height H1 of the first air feed passage 41) and the height H2 of an inner side of the second duct 52A (the height H2 of the second air feed passage 51) are identical.

An arc length of an outer peripheral face 71Aa of the first peripheral wall 71A is L11. An arc length of an outer peripheral face 81Aa of the second peripheral wall 81A is L12. The sizes H1 and H2 (heights H1 and H2) and the angles of bending α1 and α2 of the first duct 42A and the second duct 52A respectively are set to sizes such that the arc lengths L11 and L12 respectively of the first peripheral wall 71A and the second peripheral wall 81A, which are each of an arc form, are identical.

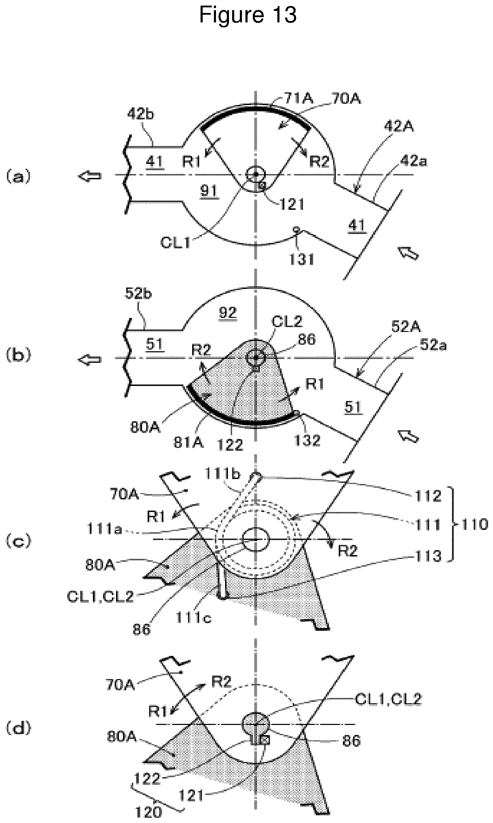

Next, actions of the duct device 30A of the second working example will be described, while referring to Fig. 13 to Fig. 16.

Figs. 13(a) to (d) are illustrations of actions when the first air volume adjusting door 70A and the second air volume adjusting door 80A are both in the fully opened state, and correspond to Figs. 12(a) and (b) and Fig. 6.

Fig. 13(a) shows a relationship between the first air volume adjusting door 70A in the fully opened state and the full closing regulating portion 131, and corresponds to Fig. 12(a). The drive source 100 (refer to Fig. 3) is maintaining the fully opened position of the first air volume adjusting door 70A. The first peripheral wall 71 in the fully opened state is positioned in an upper center of the first storage chamber 91.

Fig. 13(b) shows a relationship between the second air volume adjusting door 80A in the fully opened state and the full opening regulating portion 132, and corresponds to Fig. 12 (b). The second peripheral wall 81A in the fully opened state is positioned in a lower center of the second storage chamber 92, and further pivoting in the first pivoting direction R1 is restricted by the full opening regulating portion 132.

Fig. 13(c) shows a state of the biasing mechanism 110 when the first air volume adjusting door 70A and the second air volume adjusting door 80A are both in the fully opened state, and corresponds to Figs. 12 (a) and (b). The biasing mechanism 110 is in a neutral position, and biases the second air volume adjusting door 80A in the first pivoting direction R1 with respect to the first air volume adjusting door 70A.

Fig. 13 (d) shows a state of the angle restricting portion 120 when the first air volume adjusting door 70A and the second air volume adjusting door 80A are both in the fully opened state. The angle restricting portion 120 is restricting the second air volume adjusting door 80A in such a way as not to open farther in the first pivoting direction R1 with respect to the first air volume adjusting door 70. Because of this, the fully opened state of the second air volume adjusting door 80A is being maintained.

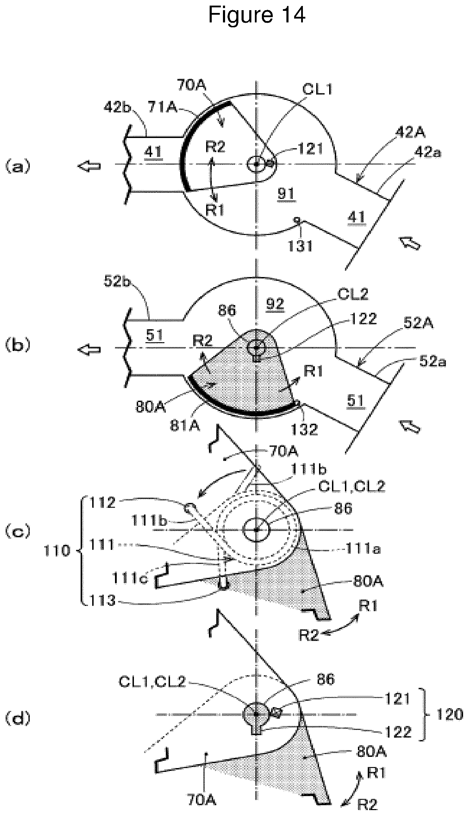

Subsequently, the drive source 100 (refer to Fig. 3) causes the first air volume adjusting door 70A to pivot in the first pivoting direction R1 (a counterclockwise direction in the drawings), whereby the first air feed passage 41 is fully closed. A result of this is shown in Figs. 14(a) to (d) .

The first peripheral wall 71A fully closes the downstream side of the first air feed passage 41, as shown in Fig. 14 (a) . Pivoting of the second peripheral wall 81A in the first pivoting direction R1 is restricted by the full opening regulating portion 132, as shown in Fig. 14 (b). Because of this, the first arm portion 111b engaged with the first engagement portion 112 of the first air volume adjusting door 70A pivots in the first pivoting direction R1 together with the first air volume adjusting door 70A, as shown in Fig. 14(c). The first protruding portion 121 pivots in the first pivoting direction R1 together with the first air volume adjusting door 70A, separating from the second protruding portion 122, as shown in Fig. 14(d).

Meanwhile, when the first peripheral wall 71A and the second peripheral wall 81A are both in the fully opened position, as shown in Figs. 13(a) to (d), the following occurs when the drive source 100 (refer to Fig. 3) causes the first air volume adjusting door 70A to pivot in the second pivoting direction R2 (a clockwise direction in the drawings).

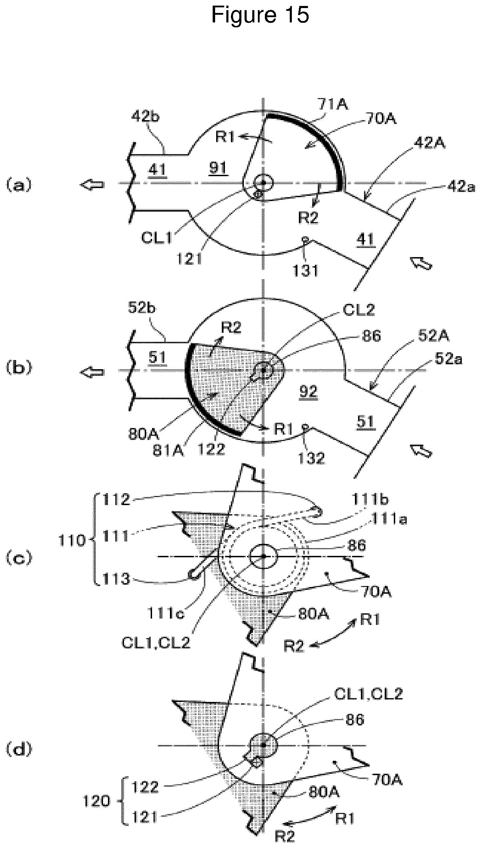

The first peripheral wall 71A pivots in the second pivoting direction R2, changing to a position near the upstream side in the upper portion of the first storage chamber 91, as shown in Fig. 15 (a). At this stage, the first peripheral wall 71A is in the fully opened position. The angle restricting portion 120 changes position, as shown in Fig. 15(d). That is, the first protruding portion 121 causes the second protruding portion 122 to pivot in the second pivoting direction R2 by pivoting in the second pivoting direction R2 together with the first air volume adjusting door 70A. As a result of this, the second air volume adjusting door 80A pivots in the second pivoting direction R2, as shown in Fig. 15(b). A leading end in the second pivoting direction R2 of the second peripheral wall 81A changes position to the downstream side and the upper side in the second air feed passage 51, thereby fully closing the downstream side of the second air feed passage 51. The opening angles of the first arm portion 111b and the second arm portion 111c do not change, as shown in Fig. 15 (c) .

Subsequently, the following occurs when the drive source 100 (refer to Fig. 3) causes the first air volume adjusting door 70A to pivot further in the second pivoting direction R2 (a clockwise direction in the drawings).

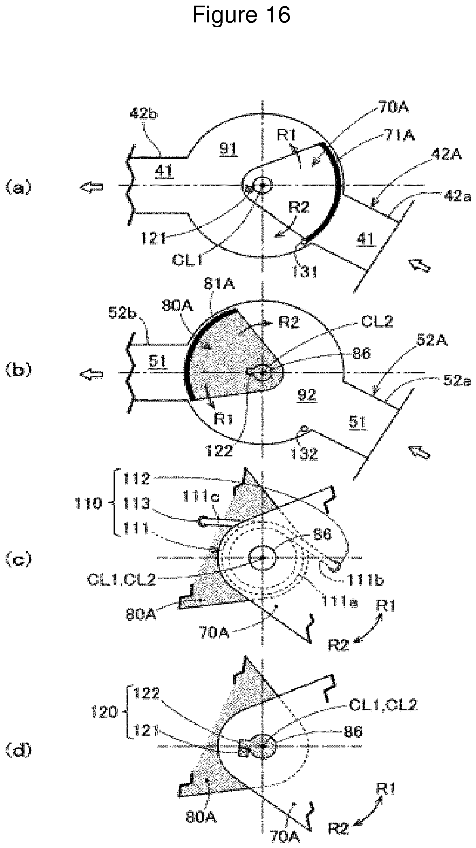

The first peripheral wall 71A pivots further in the second pivoting direction R2, thereby fully closing the upstream side of the first air feed passage 41, as shown in Fig. 16(a). In this state, further pivoting of the first peripheral wall 71A in the second pivoting direction R2 is restricted by the full closing regulating portion 131. The angle restricting portion 120 changes position, as shown in Fig. 16(d). That is, the first protruding portion 121 causes the second protruding portion 122 to pivot in the second pivoting direction R2 by pivoting in the second pivoting direction R2 together with the first air volume adjusting door 70A. As a result of this, the second air volume adjusting door 80A that is fully closed pivots further in the second pivoting direction R2, as shown in Fig. 16(b). However, the second peripheral wall 81A continues to be maintained in the state of fully closing the upstream side of the second air feed passage 51. The opening angles of the first arm portion 111b and the second arm portion 111c do not change, as shown in Fig. 16(c).

The following occurs when the drive source 100 (refer to Fig. 3) causes the first air volume adjusting door 70A to return to the first pivoting direction R1 when the first air volume adjusting door 70A and the second air volume adjusting door 80A are in the state shown in Figs. 15(a) to (d) or the state shown in Figs. 16(a) to (d).

For example, when the first air volume adjusting door 70A returns to the first pivoting direction R1 when the first air volume adjusting door 70A and the second air volume adjusting door 80A are in the state shown in Fig 16(a), the first protruding portion 121 shown in Fig. 16(d) pivots in the first pivoting direction R1 together with the first air volume adjusting door 70A, thereby attempting to separate from the second protruding portion 122.

At this time, the first arm portion 111b engaged with the first engagement portion 112 of the first air volume adjusting door 70A pivots in the first pivoting direction R1 together with the first air volume adjusting door 70A, as shown in Fig. 16(c). A pivoting force in the first pivoting direction R1 acts from the first arm portion 111b, via the coil 111a, on the second arm portion 111c engaged with the second engagement portion 113 of the second air volume adjusting door 80A. The second air volume adjusting door 80A pivots in the first pivoting direction R1, as shown in Fig. 16(b), owing to the second arm portion 111c pivoting in the first pivoting direction R1. That is, the second air volume adjusting door 80A follows the first air volume adjusting door 70A owing to an action of the biasing mechanism 110. As a result of this, the first air volume adjusting door 70A and the second air volume adjusting door 80A can return to the state shown in Figs. 13(a) and (b). Further, the first protruding portion 121 of the first air volume adjusting door 70 does not separate from the second protruding portion 122 of the second air volume adjusting door 80.

According to the second working example, the arc lengths L1 and L2 of the first peripheral wall 71A and the second peripheral wall 81A respectively can be set to the same size. Because of this, it is sufficient to prepare only one kind of the air volume adjusting doors 70A and 80A that adjust the air volumes of the air feed passages 41 and 51 of the two ducts 42A and 52A respectively. A reduction in cost of the vehicle-use duct device 30A can be achieved.

Furthermore, the vehicle-use duct device 30A according to the second working example can demonstrate the same advantages as the vehicle-use duct device 30 according to the first working example.

It is sufficient that the vehicle-use duct device 30A according to the second working example is such that the first duct 42A and the second duct 52A are of a bent configuration. That is, directions of bending and the sizes of the angles of bending α1 and α2 of the ducts 42A and 52A are arbitrary. For example, the following three modified configurations, and a configuration of a combination thereof, are conceivable. A first modified configuration is such that the direction of bending of the first duct 42A and the direction of bending of the second duct 52A differ from each other. A second modified configuration is such that the first angle of bending α1 and the second angle of bending α2 differ from each other. A third modified configuration is such that the downstream portions 42b and 52b are horizontal with respect to the upstream portions 42a and 52a, which are inclined in such a way as to descend toward the storage chambers 91 and 92.

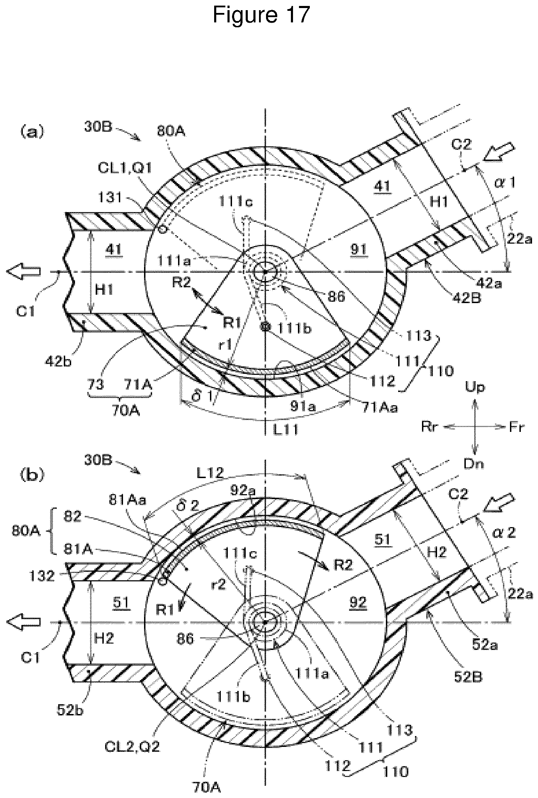

A vehicle-use duct device 30B of the third modified configuration of the second working example will be described, while referring to Fig. 17.

### Second Working Example Third Modified Configuration

Fig. 17 (a) shows a sectional configuration of a periphery of the first air volume adjusting door 70A of the vehicle-use duct device 30B according to the third modified configuration of the second working example seen from a direction along the first axial line CL1, and corresponds to the sectional position of Fig. 12(a).

Fig. 17 (b) shows a sectional configuration of a periphery of the second air volume adjusting door 80A of the vehicle-use duct device 30B according to the third modified configuration of the second working example seen from a direction along the second axial line CL2, and corresponds to the sectional position of Fig. 12(b).

The vehicle-use duct device 30B of the third modified configuration of the second working example is such that the following point is changed with respect to the second working example shown in Figs. 12 (a) and (b) (refer to Fig. 17 (a) and Fig. 17(b)). The point of change is that the first duct 42A and the second duct 52A of the second working example are changed to a first duct 42B and second duct 52B bent in the opposite direction. Other basic configurations are the same as in the vehicle-use duct device 30A according to the second working example. The same reference sign is allotted to a portion the same as in the vehicle-use duct device 30A according to the second working example, and a detailed description will be omitted.

The vehicle-use duct device 30B of the third modified configuration of the second working example is such that owing to the first duct 42B and the second duct 52B being of a bent configuration, the arc length L11 of the first peripheral wall 71A of the first air volume adjusting door 70A and the arc length L12 of the second peripheral wall 81A of the second air volume adjusting door 80A can be set to the same size. Hereafter, the vehicle-use duct device 30B (hereafter abbreviated to the "duct device 30B") of the third modified configuration of the second working example will be described in detail.

The first duct 42B is bent in the pivoting directions R1 and R2 of the first air volume adjusting door 70A, as shown in Fig. 17 (a). The upstream portion 42a is bent with respect to each other by the first angle of bending α1 in such a way as to be downwardly inclined with respect to the downstream portion 42b when looking at the first duct 42B from a direction along the first axial line CL1. That is, the central line C2 of the upstream portion 42a is oriented upward with respect to the central line C1 of the downstream portion 42b, with the first axial line CL1 as an intersection point.

The second duct 52B is bent in the pivoting directions R1 and R2 of the second air volume adjusting door 80A, as shown in Fig. 17(b). The upstream portion 52a is bent with respect to each other by the second angle of bending α2 in such a way as to be downwardly inclined with respect to the downstream portion 52b when looking at the second duct 52B from a direction along the second axial line CL2. That is, the central line C2 of the upstream portion 52a is oriented upward with respect to the central line C1 of the downstream portion 52b, with the second axial line CL2 as an intersection point.

The first air volume adjusting door 70A and the second air volume adjusting door 80A of the third modified configuration of the second working example are disposed with reverse orientation with respect to the first air volume adjusting door 70A and the second air volume adjusting door 80A of the second working example shown in Figs. 12 (a) and (b) . That is, the first air volume adjusting door 70A of the third modified configuration of the second working example is disposed oriented downward with respect to the central line C1 of the downstream portion 42b, as shown in Fig. 17(a). The second air volume adjusting door 80A of the third modified configuration of the second working example is disposed oriented upward with respect to the central line C1 of the downstream portion 52b, as shown in Fig. 17(b).

The full closing regulating portion 131 is positioned on the downstream portion 42b side of the first duct 42B (the same as in the first working example), which is the reverse of the case in the second working example. The full opening regulating portion 132 is positioned on the downstream portion 52b side of the second duct 52B (the same as in the first working example), which is the reverse of the case in the second working example.

The vehicle-use duct device 30B according to the third modified configuration of the second working example can demonstrate the same advantages as the vehicle-use duct devices 30 and 30A of the first and second working examples.

The heretofore described working examples and modifications can be combined as appropriate.

Also, the vehicle-use duct devices 30, 30A, and 30B according to the invention are also applicable to a case wherein three or more rows of each of the air feed passages 41 and 51 are aligned in parallel. Also, the invention is also applicable to a duct device for blowing air to a front seat (a first row). That is, the invention is not limited to a duct device for blowing air to a rear seat. Furthermore, a vehicle wherein seats are disposed in three or more rows is such that an end portion of the first air feed passage 41 can be caused to face a seat in a second row, and an end portion of the second air feed passage 51 can be caused to face a seat in a third row. That is, the vehicle-use duct devices 30, 30A, and 30B may be used not only for switching a volume of air blown to left and right seats, but also for switching a volume of air blown to front and rear seats.

Also, although a configuration wherein the vehicle-use duct devices 30, 30A, and 30B according to the invention are connected to the exhaust port 22a of the downstream side blower 22 has been described, this is not limiting. That is, a configuration wherein the vehicle-use duct devices 30, 30A, and 30B are connected directly or indirectly to the air conditioning device main body portion 21 may be employed, regardless of the existence or otherwise of the downstream side blower 22.

That is, provided that the actions and advantages of the invention are achieved, the invention is not limited to the working examples and modifications.

The first duct 42 and the second duct 52 not being limited to an integrated configuration, a configuration wherein the first duct 42 and the second duct 52 are individually separated, or a configuration wherein the first duct 42 and the second duct 52 are distanced from each other, may be employed.

It is sufficient that the first air volume adjusting doors 70 and 70A can pivot centered on the first axial line CL1, and it is sufficient that the second air volume adjusting doors 80 and 80A can pivot centered on the second axial line CL2. That is, the existence or otherwise of a shaft is arbitrary. Also, a configuration wherein each of the air volume adjusting doors 70 and 80 (70A and 80A) is independently supported in such a way as to be able to pivot by one shaft may be adopted.

Also, the angle restricting portion 120 is not limited to a combination of the first protruding portion 121 and the second protruding portion 122. For example, either one of the first protruding portion 121 or the second protruding portion 122 can be configured of a depressed portion (including a groove).

Also, the full closing regulating portion 131 and the full opening regulating portion 132, not being limited to a bar such as a round bar, may be, for example, protrusions provided in each of the ducts 42, 52, 42A, and 52A.

### Industrial Applicability

The vehicle-use duct devices 30, 30A, and 30B of the invention are preferred for the vehicle-use air conditioning device 20.

### Reference Signs List

30, 30A, 30B Vehicle-use duct device
41 First air feed passage
42, 42A, 42B First duct
51 Second air feed passage
52, 52A, 52B Second duct
70, 70A First air volume adjusting door
71, 71A First peripheral wall
80, 80A Second air volume adjusting door
81, 81A Second peripheral wall
91 First storage chamber
92 Second storage chamber
100 Drive source
110 Biasing mechanism
111 Helical torsion screw
111b First arm portion
111c Second arm portion
112 First engagement portion
113 Second engagement portion
120 Angle restricting portion
131 Full closing regulating portion
132 Full opening regulating portion
210 Modified biasing mechanism
212 Modified first engagement portion
213 Modified second engagement portion
CL1 First axial line
CL2 Second axial line
H1 First duct size (height)
H2 Second duct size (height)
L11 First peripheral wall arc length
L12 Second peripheral wall arc length
R1 First pivoting direction
R2 Second pivoting direction
Q1 First duct bent region
Q2 Second duct bent region
α1 First angle of bending
α2 Second angle of bending
θ Constant opening angle (constant angle)

## Claims

1. A vehicle-use duct device (30, 30A, 30B), comprising:
a first duct (42, 42A, 42B) configuring a first air feed passage (41);
a second duct (52, 52A, 52B) configuring a second air feed passage (51);
a first air volume adjusting door (70, 70A), having an arc form first peripheral wall (71, 71A) centered on a first axial line (CL1) that intersects a longitudinal direction of the first duct (42, 42A, 42B), that can fully open and fully close the first air feed passage (41) using the first peripheral wall (71, 71A), which pivots in a first pivoting direction (R1) and a second pivoting direction (R2) on a side opposite to that of the first pivoting direction (R1) centered on the first axial line (CL1);
a second air volume adjusting door (80, 80A), having an arc form second peripheral wall (81, 81A) centered on a second axial line (CL2) that intersects a longitudinal direction of the second duct (52, 52A, 52B) and is parallel to the first axial line (CL1), that can fully open and fully close the second air feed passage (51) using the second peripheral wall (81, 81A), which pivots in the first pivoting direction (R1) and the second pivoting direction (R2) centered on the second axial line (CL2);
a drive source (100) that invests the first air volume adjusting door (70, 70A) with a pivoting force in the first pivoting direction (R1) and the second pivoting direction (R2);
a biasing mechanism (110, 210) that is provided between the first air volume adjusting door (70, 70A) and the second air volume adjusting door (80, 80A) and can bias in a direction such that the second air volume adjusting door (80, 80A) attempts to pivot in the first pivoting direction (R1) with respect to the first air volume adjusting door (70, 70A);
an angle restricting portion (120) that restricts a position of the second air volume adjusting door (80, 80A) with respect to the first air volume adjusting door (70, 70A) in such a way as not to exceed a preset constant angle (θ) in the first pivoting direction (R1); and
a full opening regulating portion (132) that regulates a fully opened position of the second peripheral wall (81, 81A) with respect to the second air feed passage (51) by the second air volume adjusting door (80, 80A) that has pivoted in the first pivoting direction (R1) coming into contact.

2. The vehicle-use duct device according to claim 1, wherein the second axial line (CL2) is positioned to be concentric with the first axial line (CL1), and the biasing mechanism (110, 210) is configured of
a helical torsion screw (111) centered on the first axial line (CL1) and the second axial line (CL2),
a first engagement portion (112, 212) that engages a first arm portion (111b) included in a winding start end of the helical torsion screw (111) with the first air volume adjusting door (70, 70A), and
a second engagement portion (113, 213) that engages a second arm portion (111c) included in a winding ending end of the helical torsion screw (111) with the second air volume adjusting door (80, 80A).

3. The vehicle-use duct device according to claim 1 or claim 2, wherein
the first duct (42, 42A, 42B) has a first storage chamber (91) that bulges outward from the first air feed passage (41) and enables the first peripheral wall (71, 71A) that is in a position such as to fully open the first air feed passage (41) to be stored, and
the second duct (52, 52A, 52B) has a second storage chamber (92) that bulges outward from the second air feed passage (51) and enables the second peripheral wall (81, 81A) that is in a position such as to fully open the second air feed passage (51) to be stored.

4. The vehicle-use duct device according to any one of claims 1 to 3, wherein
the first duct (42A, 42B) is bent in a pivoting direction of the first air volume adjusting door (70A),
the second duct (52A, 52B) is bent in a pivoting direction of the second air volume adjusting door (80A),
the first air volume adjusting door (70A) is positioned in a bent region (Q1) of the first duct (42A, 42B),
the second air volume adjusting door (80A) is positioned in a bent region (Q2) of the second duct (52A), and
sizes (H1, H2) and angles of bending (α1, α2) of the first duct (42A, 42B) and the second duct (52A, 52B) respectively are set to sizes such that respective arc lengths (L11, L12) of the first peripheral wall (71A) and the second peripheral wall (81A), which are of arc forms, are identical.
